# EUROPÄISCHE PATENTSCHRIFT

(11) **EP 2 753 186 B1**
(45) Veröffentlichungstag und Bekanntmachung des Hinweises auf die Patenterteilung: **18.11.2015**
(21) Anmeldenummer: 12756464.9
(22) Anmeldetag: 07.09.2012
(51) Int. Cl.: A23G 1/12, B02C 4/04, B02C 4/30, B02C 4/44

(54) **WALZE**
ROLL
ROULEAU

(30) Priorität: 09.09.2011 EP 11180797
(43) Veröffentlichungstag der Anmeldung: 16.07.2014
(73) Patentinhaber: Bühler AG, 9240 Uzwil (CH)
(72) Erfinder: DORNBIERER, Heinz, CH-9240 Uzwil (CH); KEHRLI, David, CH-8911 Rifferswil (CH)
(74) Vertreter: Hepp Wenger Ryffel AG
(86) Internationale Anmeldenummer: PCT/EP2012/067474
(87) Internationale Veröffentlichungsnummer: WO 2013/034669

(56) Entgegenhaltungen:
- EP-A2- 0 072 504
- CH-A- 278 071
- DE-A1- 3 145 145
- DE-C- 840 948
- GB-A- 684 302
- GB-A- 825 075

## Beschreibung

Die Erfindung bezieht sich auf eine Walze, insbesondere eine drehbare Walze für ein Fünfwalzwerk zur Schokoladenherstellung, mit einer Einrichtung zum Temperieren des Walzenkörpers mittels eines Temperiermittels, eine Vorrichtung zur Temperiermittelversorgung von Walzen, ein Rüssel zum Abführen von Temperiermittel aus Walzen und ein Verfahren zum Umrüsten von Walzen.

Bei dem Temperiermittel handelt es sich in der Regel um ein Fluid, zum Beispiel Wasser, das zumeist als Kühlmittel zur Kühlung der Walze dient. Grundsätzlich kann das Temperiermittel aber auch auf eine Temperatur gebracht werden, mittels derer die Walzentemperatur stabilisiert oder erhöht wird.

Eine solche Walze ist aus der Praxis, beispielsweise aus EP0072504, bekannt. Bei dieser Walze ist ein hohler Walzenkörper vorgesehen, der im Betriebszustand horizontal angeordnet ist, in den ein Temperiermittel über eine so genannte Sprühlanze eingebracht wird. Diese ist im Wesentlichen koaxial in die Walze angeordnet.

Die Sprühlanze besitzt eine Zuführleitung für Temperierflüssigkeit und über ihre Länge im Abstand von einander verteilte Düsen, die im Wesentlichen nach oben gerichtet sind. Üblicherweise wird das Temperiermittel mittels der Sprühlanze gegen die Innenwand des Walzenkörpers gesprüht. Das Temperiermittel, rinnt dann an der Innenwand des Walzenkörpers in dessen untere Hälfte, wo sich das Temperiermittel sammelt. Das erwärmte bzw. überschüssige Temperiermittel wird über einen konzentrisch zur Mittel-Längs-Achse verlaufenen Kanal abgezogen. Da sich dieser Kanal nur bis kurz unterhalb der Achse erstreckt, läuft die Walze etwa zur Hälfte voll Temperiermittel.

Das Temperiermedium kann über eine Rücklaufleitung zu einem Thermostat fliessen, dort erneut auf die gewünschte Temperatur gebracht werden und wieder über die Sprühlanze in die Hohlwalze geführt werden.

Eine derartige Walze hat daher während ihres Betriebs ein relativ hohes Gewicht, was sich nachteilig auf die Herstellungs- und Betriebskosten auswirkt. Beispielsweise sind die Walzenlager an das Gewicht und auf die dadurch relativ hohen Kräfte anzupassen sind. Die grosse mitbewegte Masse führt ausserdem zu einem erhöhten Energieverbrauch.

Nachteilig ist zudem der erhöhte Temperiermittelverbrauch beim Betrieb derartiger Walzen. Wird Wasser zur Kühlung eingesetzt, so besteht zumindest bei einem offenen Kühlkreislauf die Gefahr der Verkalkung.

Die Menge des benötigten Temperiermittels kann verringert werden, wenn das Temperiermittel über periphere Austrittsöffnungen entfernt wird. Das Anbringen derartiger Öffnungen ist extrem aufwendig und die Öffnungen behindern ausserdem den Walzenbetrieb.

Alternativ kann das Temperiermittel, wie z.B. in DE 1 000 665 oder EP 1 661 624 gezeigt, über eine Zwangsführung innerhalb des Walzenkörpers entlang der Mantelinnenfläche geführt werden. Dazu ist ein Kühlkörper in der Walze vorgesehen.

Die Druckschrift DE 840 948 betrifft eine gekühlte Hohlwalze für Schokoladenwalzwerke. Die Kühlung erfolgt durch Einleitung eines Kühlmittel in einen Ringspalt zwischen einem Zylindereinsatz und der Walzeninnenwand.

Die Druckschrift GB 825 075 zeigt eine temperierbare Hohlwalze, in welche durch einen axialen Schaft Kühlmittel eingeführt wird, das durch eine Öffnung in der Stirnseite wieder ausgeführt wird. Das Kühlmittel wird mit einer helischen Rippe im Innenraum der Walze verteilt. Nachteilig ist daran, dass sich die Steifigkeit der Walze durch den Kühlkörper verändert und der Kühlkörper selbst auch ein Gewicht aufweist, das beim Betrieb der Walze zu berücksichtigen ist.

Die Druckschriften GB 684,302 und CH278071 zeigen eine temperierbare Walze, wobei Kühlmittel durch die Stirnseiten der Walze in die Walze hinein und aus der Walze hinaus befördert. Der Kühlmittelzulauf kann als eine Lanze ausgebildet sein, von der aus das Kühlmittel radial aus Bohrlöchern ausgegeben wird. Der Ablauf erfolgt durch Kanäle, die in der Stirnseite der Walze verlaufen und Öffnungen aufweisen, sodass das vom Kühlmittelablauf abgewandte Ende der Kanäle einen Abstand von der Innenwand der Walze hat, der kleiner als der halbe Radius ist. Die Stirnseiten und damit auch die Kanalöffnungen drehen und sich allerdings mit der Walze mit.

Die Druckschrift DE 3145145 zeigt eine Kühleinrichtung für Hohlwalzen von Walzenreibmaschinen zur Zerkleinerung von Schokolade. Die Kühlmittelzufuhr erfolgt über flexible Rohre, die mit Düsen ausgestattet sind, wobei die Rohre radial von der Achse abstehen und das Kühlmittel direkt zur Walzeninnenwand leiten. Der Abfluss des Kühlmittels erfolgt in bekannter Weise durch eine Längsbohrung im Walzenschenkel. Der Erfindung liegt die Aufgabe zugrunde, eine Walze der eingangs erwähnten Art bereit zu stellen, welche die Nachteile des Bekannten überwindet und welche effizient gekühlt werden kann.

Die Aufgabe wird gelöst durch eine Walze, insbesondere drehbare Walze für ein Walzwerk zur Schokoladenherstellung, mit einem äusseren zylindrischen Walzenkörper und einer Einrichtung zum Temperieren des Walzenkörpers mittels eines Temperiermittels. Die erfindungsgemässe Walze umfasst mindestens einen Temperiermittelablauf zum Wegführen des Temperiermittels aus der Walze und, insbesondere zusätzlich zu dem Temperiermittelablauf, mindestens einen Temperiermittelzulauf zum Zuführen des Temperiermittels in der Walze. Ablauf und Zulauf sind in einer Stirnwand des Walzenkörpers angeordnet, so dass keine Zu- oder Ableitung durch den Zylindermantel erfolgt. Ab- und/oder Zuleitung können beispielsweise durch einen Lagerzapfen der Walze erfolgen, der in einem entsprechenden in einem Lagerblock angeordneten Lager drehbar gelagert ist. Bevorzugt drehen sich Temperiermittelablauf und/oder Temperiermittelzulauf nicht mit der Walze mit.

Die erfindungsgemässe Walze umfasst ausserdem mindestens eine Sprühlanze mit mindestens einer Düse, über welche das Temperiermittel gegen die Innenwand des Walzenkörpers sprühbar ist. Bevorzugt ist eine Reihe von Düsen entlang der Sprühlanze angeordnet.

Die Sprühlanze ist mit dem Temperiermittelzulauf verbunden. Bevorzugt ist die Sprühlanze lösbar verbunden, so dass sie beispielsweise zu Reinigungszwecken entfernt werden kann oder es kann je nach Anwendung eine Sprühlanze mit einer anderen Sprühcharakteristik verwendet werden.

Erfindungsgemäss ist der mindestens eine Temperiermittelablauf mit mindestens einem Rüssel, insbesondere lösbar, verbunden, der, insbesondere frei, in den zylindrischen Walzenkörper hineinragt.

Insbesondere ist der Rüssel nicht in den Walzenmantel eingebettet und verläuft auch nicht entlang des Walzenmantels.

Unter einem Rüssel wird in der vorliegenden Anmeldung ein, bevorzugt im Wesentlichen längliches, Bauelement verstanden, durch das Fluid hindurchführbar ist. Bevorzugt handelt es sich um einen Hohlkörper.

Bevorzugt ist nur ein Rüssel vorgesehen, es können aber auch mehrere Rüssel in die Walze ragen.

Bei dem Rüssel handelt es sich bevorzugt um ein rohrförmiges oder schlauchartiges Element, an dessen einer Seite, die im montierten Zustand an dem von dem Temperiermittelablauf abgewandten Ende angeordnet ist, sich mindestens eine Öffnung befindet, durch die das Temperiermittel aus dem Walzenkörper in den Rüssel und zum Temperiermittelablauf gelangen kann. Alternativ und/oder zusätzlich können in der Rüsselwand weitere, bevorzugt verschliessbare, Öffnungen vorgesehen sein.

Der Rüssel kann aus flexiblem Material gefertigt sein und einen biegbaren, schlauchartigen Charakter haben. Bevorzugt weist der Rüssel zumindest teilweise eine im Wesentlichen definierte Zylinderform auf und ist damit eher rohrförmig.

Der Rüssel ermöglicht über eine geeignete Positionierung eine Einstellung der Menge des in der Walze befindlichen Temperiermittels.

Die Verbindung zwischen dem Rüssel und dem Temperiermittelablauf ist derart fluidführend ausführbar, dass Temperiermittel aus dem Rüssel in den Temperiermittelablauf fliessen kann.

Im Gegensatz zu Temperiermittel, das über Temperiermittelleitungen abgeführt wird, die mit dem Walzenkörper, insbesondere dem Walzenmantel, verbunden sind, muss das Temperiermittel im Rüssel nicht mit der Walze mitbewegt werden.

In einer bevorzugten Ausführung der Erfindung ist der Abstand zwischen dem vom Temperiermittelablauf abgewandten Ende des Rüssels und der Innenwand des Walzenkörpers kleiner als der Radius des Walzenkörpers, bevorzugt kleiner als halber Radius. Der Rüssel weist insbesondere im Betriebszustand nach unten, so dass das Temperiermittel aus einem Bereich abgeführt wird, welcher innerhalb der unteren Walzenkörperhälfte liegt. Wird das Temperiermittel schnell genug abgeführt, so läuft die Walze nur bis zur Höhe des Rüsselendes voll.

Die Walze beinhaltet dann also deutlich weniger an Temperiermittel als die herkömmlichen Walzen, bei denen das Temperiermittel über einen im Wesentlichen axial angeordneten Ablauf abgeführt wird.

In einer vorteilhaften Variante der Erfindung ist der Abstand zwischen dem vom Temperiermittelablauf abgewandten Ende des Rüssels und der Innenwand des Walzenkörpers verstellbar.

Der Rüssel kann z.B. ein Gelenk aufweisen und gegenüber der Walzenachse abwinkelbar sein.

Der Rüssel kann auch z.B. teleskopartig aufgebaut sein und eine veränderliche Länge besitzen.

Damit kann gesteuert werden, wie hoch der Walzenkörper mit Temperiermittel läuft. Je näher ein im Betriebszustand nach unten gerichtetes Rüsselende der Innenwand des Walzenkörpers ist, desto weniger voll muss die Walze laufen, bevor ein Ablauf des Temperiermittels erfolgen kann.

Die Effizienz der Temperierung hängt von der Art des Temperiermittels, dem Temperaturunterschied zwischen Temperiermittel und Walze, der Anzahl der Düsen sowie dem auch damit zusammenhängenden Durchsatz des Temperiermittels durch die Walze ab. Je mehr Düsen zum Besprühen verwendet werden, desto mehr Temperiermittel kann in die Walze eingebracht werden und desto gleichmässiger kann das Temperiermittel über die Walzeninnenwand verteilt werden.

Für bestimmte Anwendungen kann gewünscht werden, dass die Walze mit mehr oder weniger Temperiermittel vollläuft. Die Menge kann über den Abstand des Rüsselendes von der Walze eingestellt werden.

Der Abstand ist insbesondere über den Winkel zwischen einem bevorzugt rohrartigen Rüssel und der Achse des Zylinderkörpers verstellbar.

Dazu ist der Rüssel oder zumindest der vom Temperiermittelablauf abgewandte Teil des Rüssels gelenkig an der Verbindung zum Temperiermittelablauf angebracht.

Zum Einführen in die Walze kann der Rüssel koaxial zur Walzenkörper ausgerichtet sein. Ist der Rüssel in der Walze, so kann er oder mindestens ein Rüsselteil, abgeklappt werden, bis das Rüsselende den gewünschten Abstand zur Innenwand des Walzenkörpers einnimmt.

Zu Wartungszwecken oder zum Reinigen muss daher nicht die komplette Walze demontiert werden, sondern es reicht, wenn der in Streckung gebrachte Rüssel durch eine Öffnung in der Stirnfläche des Walzenkörpers herausgezogen wird.

In einer weiteren vorteilhaften Ausführung der Walze sind der Temperiermittelablauf und der Temperiermittelzulauf gemeinsam axial zu der und/oder in die Walze geführt. Der Walzenkörper benötigt dann nur eine Versorgungsöffnung in einer der Stirnflächen.

Bevorzugt sind der Temperiermittelablauf und der Temperiermittelzulauf in einem gemeinsamen Rohr angeordnet. Temperiermittelablauf und Temperiermittelzulauf können dann zu Wartungs- und Reinigungszwecken gemeinsam entfernt und wieder montiert werden, was diese Vorgänge erleichtert und die benötigte Zeit verringert.

Das Rohr wird bevorzugt axial in die Walze geführt.

Bevorzugt bilden Temperiermittelablauf, Temperiermittelzulauf, die mindestens eine Sprühlanze und der mindestens eine Rüssel eine bauliche Einheit, sodass Temperiermittelablauf, Temperiermittelzulauf, die mindestens eine Sprühlanze und der mindestens eine Rüssel in einem Schritt gemeinsam an der Walze montiert werden können.

In einer vorteilhaften Ausführung der Erfindung weist die Walze zwei Sprühlanzen auf.

Die Düsen der Sprühlanzen sind in axialer Richtung bevorzugt jeweils versetzt zueinander angeordnet. Auf diese Weise können pro Axiallänge mehr Düsen angeordnet werden als auf einer einzelnen Sprühlanze.

Die Sprühlanzen können mit Düsen ausgestattet sein, die jeweils unterschiedliche Sprührichtungen weisen. Zum Beispiel weichen die Sprührichtungen der Düsen der einen Sprühlanze von der Vertikalen um einen Winkel ab, während die Sprührichtungen der Düsen der anderen Düsenlanze um entsprechende Winkel in der anderen Richtung von der Vertikalen abweichen.

Der Innenraum des Walzenkörpers wird dadurch gleichmässiger mit Temperiermittel beaufschlagt, was zu einer effizienteren Temperierung führt.

Das Abführen des Temperiermittels kann nach Art eines Überlaufs in verbundenen Gefässen erfolgen oder in der Ablaufleitung kann eine Pumpe angeordnet sein, die für ein Absaugen des Temperiermittels aus der Walze sorgt.

Bevorzugt weist die Walze Mittel zur Erzeugung von Überdruck in dem Walzeninnenraum auf, insbesondere eine Luftzufuhr. Der Druck sorgt dafür, dass das Temperiermittel aus dem Rüssel ausläuft. Der Füllstand des Walzenkörpers steigt somit nicht über die Höhe des Rüsselendes und die gewünschte Menge von Temperiermittel in dem Walzenkörper ist gewährleistet.

Die Luft wird bevorzugt ebenfalls durch eine Öffnung in der Stirnfläche des Walzenkörpers eingeleitet.

Der Überdruck kann auch über eine Gaszufuhr durch die Sprühlanze erzeugt werden.

Alternativ oder zusätzlich kann eine Leitung zum Zuleiten von Druckluft in dem Rüssel vorgesehen sein.

Es wird ein Überdruck zwischen 0.2 und 0.8 bar, bevorzugt zwischen 0.5 und 0.6 bar, weiter bevorzugt von etwas 0,5 bar erzeugt.

In einer weiteren vorteilhaften Ausführung der Walze ist mindestens ein Sensor zur Messung des Temperiermittelfüllstandes vorgesehen.

Der Sensor kann an dem Walzenmantel angebracht sein oder an einer Stirnseite der Walze. Bevorzugt ist der Füllstandssensor so angebracht, dass er nicht mit der Walze dreht. Dazu kann er an einem über den Lagerzapfen geführten Sensorhalter befestigt sein oder an der Temperiermittelzu- oder Temperiermittelableitung, z.B. an der Sprühlanze.

Besonders bevorzugt ist der Sensor mit dem Rüssel verbunden.

Der Sensor kann auch in der Temperiermittelableitung und/oder Temperiermittelzuleitung vorgesehen sein.

Bei dem Sensor kann es sich beispielsweise um einen Ultraschall-, Radar-, Laser- oder Infrarotsensor handeln, mit welchem der Abstand zwischen dem Sensor und der Temperiermitteloberfläche bestimmt wird.

Bei dem Sensor kann es sich beispielsweise um einen kapazitiven oder konduktiven Füllstandssensor handeln.

Alternativ kann es sich bei dem Sensor um einen Durchflussmesser handeln, der die Menge des zu- und/oder abfliessenden Temperiermittels misst, wodurch Rückschlüsse auf den Füllstand gemacht werden können.

Alternativ kann der Rüssel als Füllstandssensor dienen. Die Füllstandshöhe kann beispielsweise bestimmt werden, indem abhängig vom Abstand des Rüsselendes vom Walzeninnenmantels festgestellt wird, ob Flüssigkeit aus dem Rüssel abläuft. Die Füllstandshöhe ergibt sich aus dem Abstand zwischen Rüsselende und Walzeninnenmantel, bei welchem gerade noch oder gerade schon Temperiermittel aus der Walze austritt.

Ein abwinkelbarer Rüssel kann als Füllstandssensor kalibriert werden, indem die einstellbaren Winkel den jeweiligen Füllstandshöhen zugeordnet werden.

Mit dem Füllstandsensor kann kontrolliert werden, dass sich die gewünschte Menge an Temperiermittel in der Walze befindet.

Mit Hilfe des Füllstandssensors kann die Menge an Temperiermittel, die sich in der Walze befindet, geregelt werden. Überschreitet der Füllstand z.B. einen Sollwert, so kann der Innendruck über eine zusätzliche Druckluftzufuhr erhöht werden. Unterschreitet der Füllstand einen festgelegten Sollwert, so kann z.B. die Zufuhrmenge an Temperiermittel erhöht werden oder die Menge des abgeführten Temperiermittels erniedrigt werden. Dies geschieht, bis der Füllstand wieder den gewünschten Wert hat.

Die Aufgabe wird ausserdem gelöst durch eine Vorrichtung zur Temperiermittelversorgung von Walzen. Die Vorrichtung umfasst mindestens einen Temperiermittelablauf zum Wegführen eines Temperiermittels von und/oder aus einer Walze und mindestens einen Temperiermittelzulauf zum Zuführen eines Temperiermittels zu der und/oder in die Walze. Der Temperiermittelzulauf ist mit mindestens einer Sprühlanze, insbesondere lösbar, verbunden, die mindestens eine Düse aufweist, über welche das Temperiermittel sprühbar ist.

Der mindestens eine Temperiermittelablauf ist erfindungsgemäss mit mindestens einem Rüssel, insbesondere lösbar, verbunden, der im montierten Zustand in den Walzenkörper hineinragt.

Mit der Vorrichtung können neue Walze versehen werden. Ausserdem können bestehende Walzen umgerüstet und durch die Montage der erfindungsgemässen Vorrichtung mit einer verbesserten Temperiermittelversorgung ausgestattet werden.

In einer vorteilhaften Ausführung der erfindungsgemässen Vorrichtung ist der Winkel zwischen mindestens einer Sprühlanze und mindestens einem Rüssel, wenigstens einem Endstück des Rüssels, verstellbar.

In der Regel wird die Vorrichtung so montiert, dass die Sprühlanze in etwa axial mit der Walzenachse verläuft, zumindest parallel zur Walzenachse verläuft, damit ein gleichmässiges Sprühen erfolgt.

Bevorzugt ist der Rüssel zum Einführen in die Walze gestreckt, sodass er in einer kleine, koaxial angeordnete Öffnung der Walze einführbar ist und in der Walze abgeklappt.

Die Winkelverstellung ermöglicht, dass das Ende des Rüssels an den Walzeninnenmantel angenähert werden kann.

Bevorzugt weist die Vorrichtung eine Luftzufuhr zur Einleitung von Druckluft in den Walzenkörper auf.

Die gesamte Temperiermittelversorgung bildet dann eine bauliche Einheit, die als Gesamtheit zu Wartungs- Reinigungs- und Umrüstzwecken montierbar ist. Die Vorrichtung weist bevorzugt Dichtungsmittel und Montagemittel auf, so dass die Vorrichtung als Temperiermittelversorgung an eine Hohlwalze montierbar ist.

Die Aufgabe wird ausserdem gelöst durch einen Rüssel zum Abführen von Temperiermittel aus Walzen. Der Rüssel ist mit einem Temperiermittelablauf zum Wegführen eines Temperiermittels von und/oder aus einer Walze verbindbar und der Winkel zwischen dem Rüsselendstück und der Verbindungsachse und/oder der Achse des distalen Rüsselendes und der Verbindungsachse ist verstellbar.

Der Rüssel wird auf den Temperiermittelablauf gesteckt oder geschraubt, sodass eine fluiddichte Verbindung entsteht.

Die Verstellung des Winkels wird zum Beispiel über eine gelenkige Verbindung zwischen Rüssel und Temperiermittelablauf ermöglicht.

In einer vorteilhaften Ausführungsform weist der Rüssel einen Rüsselansatz und eine Rüsselendstück auf, die gelenkig verbunden sind.

Bei dem Rüssel kann es sich auch um ein flexibles Rohr handeln, dessen Ausrichtung veränderbar ist.

Die Aufgabe wird gelöst durch ein Verfahren zum Kühlen einer Walze, bevorzugt wie oben beschrieben, wobei Temperiermittel über einen Temperiermittelzulauf zu der und/oder in die Walze geführt wird, das Temperiermittel über eine Sprühlanze mit mindestens einer Düse gegen die Innenwand des Walzenkörpers gesprüht wird, das Temperiermittel über eine Öffnung in einem Rüssel, der in den Walzenkörper hineinragt, aus dem Walzenkörper zu einem Temperiermittelablauf wegbefördert wird.

In einer vorteilhaften Ausführung wird in der Walze ein Überdruck erzeugt, der dafür sorgt, dass das Temperiermittel aus der Walze abläuft. Zusätzlich oder alternativ wird das Temperiermittel abgesaugt.

In einer weiteren vorteilhaften Ausführung wird vor Inbetriebnahme der Walze der Winkel des Rüssels gegenüber der Walzenachse eingestellt.

Die Aufgabe wird ausserdem gelöst durch ein Verfahren zum Umrüsten von Walzen, wobei zunächst die bisherige Temperiermittelversorgung entfernt wird und anschliessend eine Montage einer Vorrichtung wie oben beschrieben erfolgt.

Die Erfindung ist nachfolgend in einem Ausführungsbeispiel anhand von einer Figur näher erläutert.

Es zeigen
- Figur 1: ein Schnittbild einer erfindungsgemässe Walze mit einem ersten Beispiel für einen Rüssel;
- Figuren 2a-2c: Ansichten eines zweiten Beispiels für einen erfindungsgemässen Rüssel.

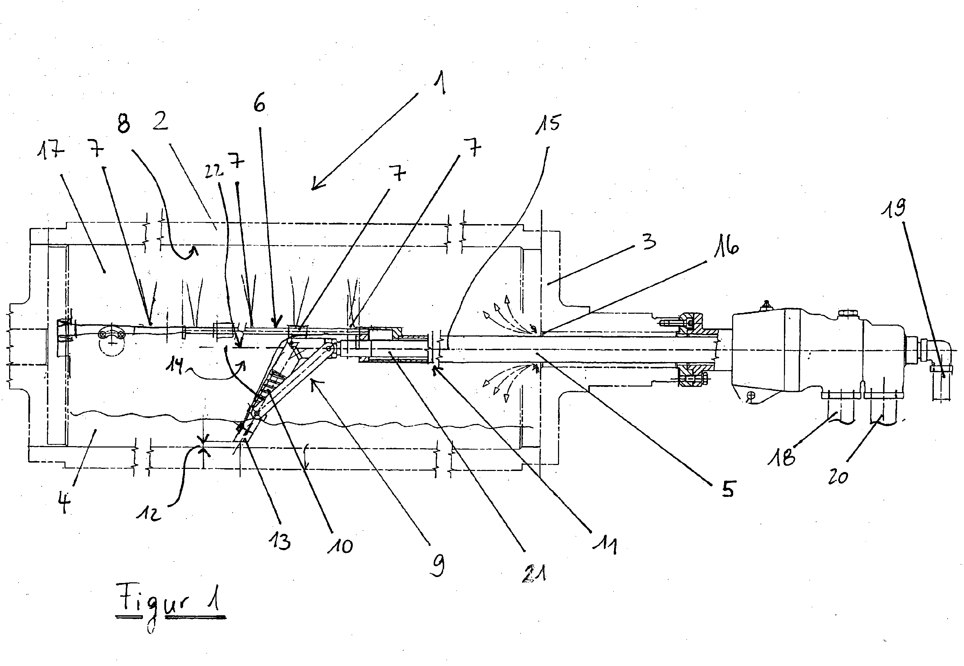

Figur 1 zeigt ein Schnittbild einer erfindungsgemässen Walze 1.

Die Walze 1 besitzt einen äusseren zylindrischen Walzenkörper 2.

Der Walzenkörper 2 ist 260 cm lang und besitzt einen Aussendurchmesser von 40 cm sowie einen Innendurchmesser von 33 cm. Das Material der Walze ist selbstverständlich wärmeleitend, Die Walze ist bevorzugt aus einem Metallguss gefertigt, beispielsweise Grauguss.

In einer Stirnwand 3 des Walzenkörpers 2 sind ein nicht explizit dargestellter Temperiermittelablauf zum Wegführen des Temperiermittels 4 aus der Walze und ein ebenfalls nicht explizit dargestellter Temperiermittelzulauf zum Zuführen des Temperiermittels in der Walze 1 angeordnet.

Der Temperiermittelablauf und der Temperiermittelzulauf verlaufen in einem gemeinsamen Rohr 5.

Das Temperiermittel 4 wird über zwei Sprühlanzen 6, auf denen Düsen 7 aufgereiht sind, gegen die Innenwand 8 des Walzenkörpers 2 gesprüht. Der Temperiermittelablauf ist mit einem Rüssel 9 verbunden, der in den zylindrischen Walzenkörper 2 hineinragt.

Der Rüssel 9 hat eine Verbindung 11 zu dem im Rohr 5 befindlichen aber nicht explizit gezeigten Temperiermittelablauf.

Das distale Ende 10 des Rüssels 9 ist gelenkig an dem Rüsselansatz 21 angebracht.

Der Abstand 12 zwischen dem vom Temperiermittelablauf abgewandten Ende 13 des Rüssels und der Innenwand 8 des Walzenkörpers 2 ist kleiner als der Radius des Walzenkörpers. Bei der in der Figur gezeigten Stellung des Rüssels 9 beträgt der Abstand 12 etwa 1cm. Die Abführung des Temperiermittels 4 erfolgt also sehr nahe an der Innenwand 8.

Der Abstand 12 kann verändert werden, indem der Winkel 14 zwischen dem distalen Rüsselende 10 und der Achse 15 des Zylinderkörpers verstellt wird. Damit wird gleichzeitig auch der Winkel zwischen dem distalen Rüsselende 10 und der Sprühlanze 6, bzw. zwischen dem distalen Rüsselende 13 und der Achse 22 der Verbindung 11 verändert

Zum Herausfahren der gesamten Temperiermittelversorgung aus dem Walzenkörper kann der Winkel 14 auf 0 Grad gestellt werden. Der Rüssel 9 befindet sich dann in Streckung und kann durch eine Öffnung in der Stirnwand 3 herausgezogen werden.

Um das Rohr 5, in dem sich Temperiermittelzu- und -ablauf befinden, herum sind Zuleitungen 16 für Luft verteilt. Die Luft erzeugt einen Überdruck von etwa 0.5 Bar in dem Walzeninnenraum 17.

Luftdruck und Wasserdruck sind unabhängig voneinander regulierbar.

Das Rohr 5 mit Temperiermittelzu- und -ablauf verläuft durch den Schaft der Walze 1 und besitzt Anschlüsse zu einem Temperiermittelzuführstutzen 18 und einem Temperiermittelabführstutzen 19, sowie zu einem Luftzuführstutzen 20.

Das Temperiermittel 4 wird über ein in der Figur nicht gezeigtes Thermostat in einem geschlossenen Kreislauf geführt. Das Temperiermittel ist dazu geimpft, um ein Verschmutzen und /oder Verkalken zu verhindern.

Zum Beispiel wird destilliertes Wasser mit Zusätzen von Rostschutzmittel und/oder Verkalkungsschutz verwendet.

Das Temperiermittel steht möglichst niedrig im Zylinder. Das Rüsselende 10 weist einen Temperatursensor auf, der mit einer Regelung verbunden ist, die dafür sorgt, dass bei einer Temperatur, die höher ist als eine zuvor definierte Grenztemperatur die Zuflussmenge an Temperiermittel erhöht wird. Die zugeführte Wassermenge hängt also von der Wassertemperatur im Bereich des Rüssels ab.

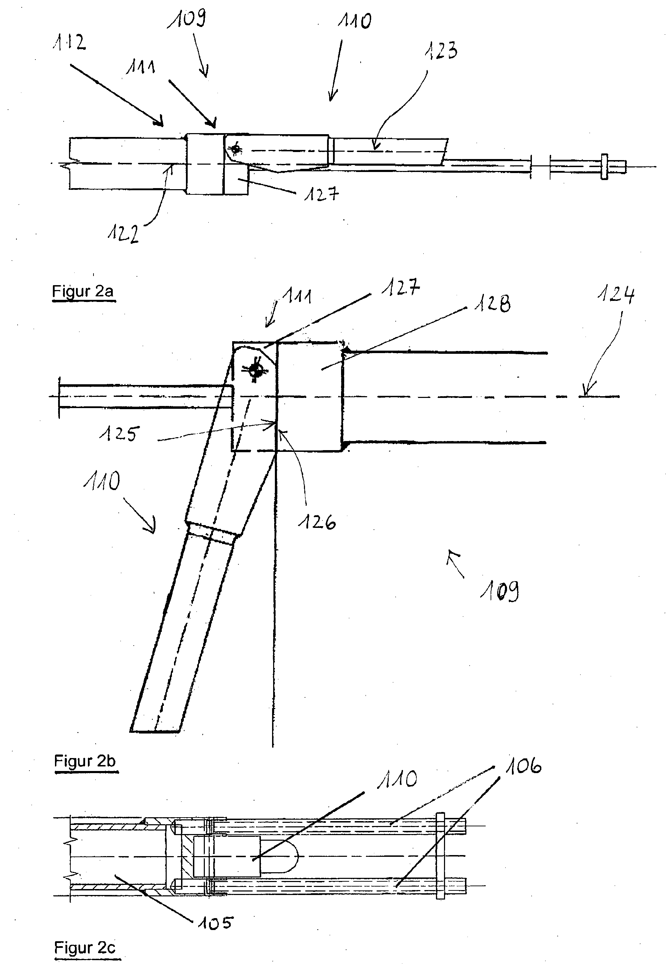

Figur 2a zeigt eine seitliche Ansicht eines zweiten Beispiels für einen erfindungsgemässen Rüssel 109 in Einführposition.

Das distale Ende 110 des Rüssels 109 ist mit einem Gelenk 111 an dem Rüsselansatz 112 angebracht. Wenn der Rüssel 109 in die Walze geschoben oder aus der Walze herausgezogen wird, hat die Achse des distalen Endes 123 eine Stellung parallel zur Einführachse 124, zur Achse des gemeinsamen Rohrs 105 und zur Verbindungsachse 122.

Figur 2a zeigt eine seitliche Ansicht des zweiten Beispiels für den erfindungsgemässen Rüssel 109 in Betriebsposition.

Befindet sich der Rüssel 109 in der Walze, so klappt das Rüsselende 110 aufgrund der Schwerkraft soweit nach untern, wie es die Anschlagflächen 125, 126 des Gelenks 111 zulassen.

Der Rüssel 109 besitzt ein Innenrohr 127 und ein Aussenrohr 128, die gegeneinander verschiebbar sind und mittels eines nicht explizit dargestellten Gewindes fixiert werden können.

Wenn das Rüsselende 110 abgeklappt ist, wird das Innenrohr 127 gegenüber dem Aussenrohr 128 fixiert, sodass das Rüsselende 110 nicht frei hochklappen kann.

Erst wenn der Rüssel 109 wieder aus der Walze herausgezogen werden soll, wird die Verbindung zischen Innenrohr 127 und Aussenrohr 128 gelöst, das Gelenk 111 hat wieder Spiel und das Rüsselende 110 kann hochklappen, sobald es während des Zurückziehens gegen die Walzenwand stösst.

Figur 2a zeigt eine Ansicht von oben auf das zweite Beispiels für den erfindungsgemässen Rüssel 109 in Betriebsposition. Der Rüssel 109 ist zwischen den Sprühlanzen 106 angeordnet.

Bei einem typischen Innendurchmesser der Walze von 340 mm und Längen von 1800mm oder 2400mm wird für eine effektive Kühlung ein Durchsatz von etwa 2m³ pro Stunde benötigt.

## Patentansprüche

1. Walze, insbesondere drehbare Walze für ein Walzwerk zur Schokoladenherstellung,
mit einem äusseren zylindrischen Walzenkörper (2) und
einer Einrichtung zum Temperieren des Walzenkörpers mittels eines Temperiermittels (4), umfassend
mindestens einen in einer Stirnwand (3) des Walzenkörpers (2) angeordneten Temperiermittelablauf zum Wegführen des Temperiermittels (4) von und/oder aus der Walze (1),
mindestens einen in einer Stirnwand (3) des Walzenkörpers (2) Temperiermittelzulauf zum Zuführen des Temperiermittels (4) in die und/oder zu der Walze (1),
mindestens eine Sprühlanze (6; 106) mit mindestens einer Düse (7), über welche das Temperiermittel (4) gegen die Innenwand (8) des Walzenkörpers (2) sprühbar ist,
**dadurch gekennzeichnet, dass**
der mindestens eine Temperiermittelablauf mit mindestens einem Rüssel (9; 109) verbunden ist, der in den zylindrischen Walzenkörper (2) hineinragt.

2. Walze gemäss Anspruch 1,
**dadurch gekennzeichnet, dass**
der Abstand (12) zwischen dem vom Temperiermittelablauf abgewandten Ende (10; 110) des Rüssels (9; 109) und der Innenwand (8) des Walzenkörpers (2) kleiner ist als der Radius des Walzenkörpers (2), bevorzugt kleiner als der halbe Radius.

3. Walze gemäss Anspruch 1 oder 2,
**dadurch gekennzeichnet, dass**
der Abstand (12) zwischen dem vom Temperiermittelablauf abgewandten Ende (10; 110) des Rüssels (9; 109) und der Innenwand (8) des Walzenkörpers verstellbar ist, insbesondere durch Verstellung des Winkels (14) zwischen dem vom Temperiermittelablauf abgewandten Ende (10; 110) des Rüssels (9; 109) und der Achse (15) des zylindrischen Walzenkörpers (2).

4. Walze gemäss einem der vorhergehenden Ansprüche,
**dadurch gekennzeichnet, dass**
der Temperiermittelablauf und der Temperiermittelzulauf gemeinsam axial geführt sind, bevorzugt in einem gemeinsamen Rohr (5; 105) angeordnet sind.

5. Walze gemäss einem der vorhergehenden Ansprüche,
**dadurch gekennzeichnet, dass**
die Walze (1) zwei Sprühlanzen (6; 106) aufweist.

6. Walze gemäss einem der vorhergehenden Ansprüche,
**dadurch gekennzeichnet, dass**
die Walze (1) Mittel zur Erzeugung von Überdruck in dem Walzeninnenraum, insbesondere eine Luftzufuhr (16), aufweist.

7. Vorrichtung zur Temperiermittelversorgung von Walzen, umfassend
mindestens einen Temperiermittelablauf zum Wegführen eines Temperiermittels (4) von und/oder aus einer Walze (1),
mindestens einen Temperiermittelzulauf zum Zuführen eines Temperiermittels (4) zu der und/oder in die Walze (1),
mindestens eine Sprühlanze (6) mit mindestens einer Düse (7), über welche das Temperiermittel (4) sprühbar ist,
**dadurch gekennzeichnet, dass**
der mindestens eine Temperiermittelablauf mit mindestens einem Rüssel (9; 109) verbunden ist, der im montierten Zustand in den Walzenkörper (2) hineinragt.

8. Vorrichtung gemäss Anspruch 7, **dadurch gekennzeichnet, dass** der Winkel zwischen Sprühlanze (6) und Rüssel (9) verstellbar ist.

9. Vorrichtung gemäss Anspruch 7 oder 8, **dadurch gekennzeichnet, dass** die Vorrichtung eine Luftzufuhr (16) zur Einleitung von Druckluft in den Walzenkörper (2) aufweist.

10. Rüssel zum Abführen von Temperiermittel aus Walzen, **dadurch gekennzeichnet, dass** der Rüssel mit einem Temperiermittelablauf zum Wegführen eines Temperiermittels (4) von und/oder aus einer Walze (1) verbindbar ist und der Winkel (14) zwischen der Achse (123) des distalen Rüsselendes (10; 110) und der Verbindungsachse (22) verstellbar ist.

11. Verfahren zum Umrüsten von Walzen, **gekennzeichnet durch** die Schritte
- Entfernen der bisherigen Temperiermittelversorgung,
- Montage einer Vorrichtung gemäss einem der Ansprüche 7-9.

## Claims

1. A roll, in particular a rotatable roll for a roll refiner for making chocolate,
having an outer cylindrical roll body (2) and a device for controlling the temperature of the roll body by means of a temperature control medium (4), comprising
at least one temperature control medium drain, arranged in an end wall (3) of the roll body (2), for carrying away the temperature control medium (4) from and/or out of the roll (1),
at least one temperature control medium feed, in an end wall (3) of the roll body (2), for feeding the temperature control medium (4) into and/or to the roll (1), and
at least one spray lance (6; 106) having at least one nozzle (7), by way of which the temperature control medium (4) can be sprayed against the inner wall (8) of the roll body (2),
**characterized in that**
the at least one temperature control medium drain is connected to at least one spout (9; 109), which protrudes into the cylindrical roll body (2).

2. The roll as claimed in claim 1,
**characterized in that**
the distance (12) between the end (10; 110) of the spout (9; 109) that is remote from the temperature control medium drain and the inner wall (8) of the roll body (2) is less than the radius of the roll body (2), preferably less than half the radius.

3. The roll as claimed in claim 1 or 2,
**characterized in that**
the distance (12) between the end (10; 110) of the spout (9; 109) that is remote from the temperature control medium drain and the inner wall (8) of the roll body is adjustable, in particular by adjustment of the angle (14) between the end (10; 110) of the spout (9; 109) that is remote from the temperature control medium drain and the axis (15) of the cylindrical roll body (2).

4. The roll as claimed in one of the preceding claims,
**characterized in that**
the temperature control medium drain and the temperature control medium feed are jointly guided axially, preferably are arranged in a shared tube (5; 105).

5. The roll as claimed in one of the preceding claims,
**characterized in that**
the roll (1) has two spray lances (6; 106).

6. The roll as claimed in one of the preceding claims,
**characterized in that**
the roll (1) has means for generating positive pressure in the interior space of the roll, in particular an air feed (16).

7. A device for supplying temperature control medium to rolls, comprising at least one temperature control medium drain for carrying away a temperature control medium (4) from and/or out of a roll (1),
at least one temperature control medium feed for feeding a temperature control medium (4) to and/or into the roll (1),
at least one spray lance (6) having at least one nozzle (7), by way of which the temperature control medium (4) can be sprayed,
**characterized in that**
the at least one temperature control medium drain is connected to at least one spout (9; 109), which in the fitted state protrudes into the roll body (2).

8. The device as claimed in claim 7, **characterized in that** the angle between the spray lance (6) and the spout (9) is adjustable.

9. The device as claimed in claim 7 or 8, **characterized in that** the device has an air feed (16) for introducing compressed air into the roll body (2).

10. A spout for removing temperature control medium from rolls, **characterized in that** the spout is connectable to a temperature control medium drain for carrying away a temperature control medium (4) from and/or out of a roll (1) and the angle (14) between the axis (123) of the distal end (10; 110) of the spout and the axis of the connection (22) is adjustable.

11. A method for converting rolls, **characterized by** the steps of
- removing the existing temperature control medium supply,
- fitting a device as claimed in one of claims 7-9.

## Revendications

1. Rouleau, en particulier rouleau rotatif pour un laminoir pour la fabrication de chocolat,
comprenant un corps de rouleau (2) cylindrique extérieur et
un dispositif d'équilibrage de la température du corps de rouleau au moyen d'un fluide d'équilibrage de la température (4), comportant au moins une sortie de fluide d'équilibrage de la température disposée dans une paroi frontale (3) du corps de rouleau (2) pour emmener le fluide d'équilibrage de la température (4) à partir et/ou hors du rouleau (1),
au moins une entrée de fluide d'équilibrage de la température dans une paroi frontale (3) du corps de rouleau (2) pour amener le fluide d'équilibrage de la température (4) dans le rouleau (1) et/ou jusqu'à celui-ci,
au moins une lance de pulvérisation (6 ; 106) comprenant au moins une buse (7), par le biais de laquelle le fluide d'équilibrage de la température (4) peut être pulvérisé contre la paroi intérieure (8) du corps de rouleau (2),
**caractérisé en ce que**
l'au moins une sortie de fluide d'équilibrage de la température est reliée à au moins une trompe (9 ; 109) qui pénètre dans le corps de rouleau (2) cylindrique.

2. Rouleau selon la revendication 1,
**caractérisé en ce que**
la distance (12) entre l'extrémité (10 ; 110) de la trompe (9 ; 109) opposée à la sortie de fluide d'équilibrage de la température et la paroi intérieure (8) du corps de rouleau (2) est inférieure au rayon du corps de rouleau (2), de préférence inférieure au demi-rayon.

3. Rouleau selon la revendication 1 ou 2, **caractérisé en ce que**
la distance (12) entre l'extrémité (10 ; 110) de la trompe (9 ; 109) opposée à la sortie de fluide d'équilibrage de la température et la paroi intérieure (8) du corps de rouleau est réglable, en particulier par réglage de l'angle (14) entre l'extrémité (10 ; 110) de la trompe (9 ; 109) opposée à la sortie de fluide d'équilibrage de la température et l'axe (15) du corps de rouleau (2) cylindrique.

4. Rouleau selon l'une quelconque des revendications précédentes,
**caractérisé en ce que**
la sortie de fluide d'équilibrage de la température et l'entrée de fluide d'équilibrage de la température sont guidées axialement en commun, de préférence sont disposées dans un tube commun (5 ; 105).

5. Rouleau selon l'une quelconque des revendications précédentes,
**caractérisé en ce que**
le rouleau (1) comprend deux lances de pulvérisation (6 ; 106).

6. Rouleau selon l'une quelconque des revendications précédentes,
**caractérisé en ce que**
le rouleau (1) comprend des moyens de génération de surpression dans l'espace intérieur de rouleau, en particulier une admission d'air (16).

7. Dispositif d'alimentation en fluide d'équilibrage de la température de rouleaux, comportant au moins une sortie de fluide d'équilibrage de la température pour emmener un fluide d'équilibrage de la température (4) à partir et/ou hors d'un rouleau (1),
au moins une entrée de fluide d'équilibrage de la température pour amener un fluide d'équilibrage de la température (4) dans le rouleau (1) et/ou jusqu'à celui-ci,
au moins une lance de pulvérisation (6) comprenant au moins une buse (7), par le biais de laquelle le fluide d'équilibrage de la température (4) peut être pulvérisé,
**caractérisé en ce que**
l'au moins une sortie de fluide d'équilibrage de la température est reliée à au moins une trompe (9 ; 109) qui pénètre dans le corps de rouleau (2) à l'état monté.

8. Dispositif selon la revendication 7, **caractérisé en ce que** l'angle entre la lance de pulvérisation (6) et la trompe (9) est réglable.

9. Dispositif selon la revendication 7 ou 8, **caractérisé en ce que** le dispositif comprend une admission d'air (16) pour l'introduction d'air comprimé dans le corps de rouleau (2).

10. Trompe pour l'évacuation de fluide d'équilibrage de la température hors de rouleaux, **caractérisée en ce que** la trompe peut être reliée à une sortie de fluide d'équilibrage de la température pour emmener un fluide d'équilibrage de la température (4) à partir et/ou hors d'un rouleau (1) et l'angle (14) entre l'axe (123) de l'extrémité distale de trompe (10 ; 110) et l'axe de liaison (22) est réglable.

11. Procédé de modernisation de rouleaux, **caractérisé par** les étapes suivantes :
- retrait de l'ancienne alimentation en fluide d'équilibrage de la température,
- montage d'un dispositif selon l'une quelconque des revendications 7 à 9.
